**Europäisches Patentamt**

**European Patent Office**

**Office européen des brevets**

(11) Veröffentlichungsnummer: **0 252 069**
A2

(12) **EUROPÄISCHE PATENTANMELDUNG**

(21) Anmeldenummer: **87890151.1**

(22) Anmeldetag: **02.07.87**

(51) Int. Cl.³: **C 02 F 11/02**

(30) Priorität: **04.07.86 AT 1822/86**

(43) Veröffentlichungstag der Anmeldung:
**07.01.88 Patentblatt 88/1**

(84) Benannte Vertragsstaaten:
**BE CH DE ES FR GB GR IT LI LU NL SE**

(71) Anmelder: **VOEST-ALPINE Aktiengesellschaft**
**Friedrichstrasse 4**
**A-1011 Wien(AT)**

(72) Erfinder: **Kroiss, Helmut, Dipl.-Ing.Dr.**
**Abelegasse 26/1/20**
**A-1160 Wien(AT)**

(72) Erfinder: **Kornel, Jahn, Dipl.-Ing.**
**Seisgasse 14**
**A-1040 Wien(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Vorrichtung zur Behandlung von Abfallschlämmen.**

(57) Eine Vorrichtung zur Behandlung von Abfallschlämmen, wobei in einem Reaktionsraum (7) die Schlammentseuchung durch aerobe Umsetzung bei Temperaturen von über 50°C und unterhalb des Siedepunktes der flüssigen Phase vorgenommen wird und Rohschlamm durch Wärmeaustausch mit aerob behandeltem Schlamm vorgewärmt wird, weist oberhalb des Reaktionsraumes (7) für die aerobe Schlammbehandlung einen Rohschlammsammelraum (4) auf, an dessen Wänden, insbesondere dessen Boden (19), die Verfahrensabgase der aeroben Behandlung zur Vorwärmung des Rohschlammes unter gleichzeitig zumindest teilweiser Entfeuchtung durch Kondensation zur Abluftleitung (22), insbesondere zu einem Abluftfilter (23), vorbeigeführt sind. Durch Wärmeaustausch zwischen Rohschlamm und Belebtschlamm wird eine Wärmerückgewinnung der Abluft vorgenommen, bei welcher die Verfahrensabgase durch das relativ niedrige Temperaturniveau des Rohschlammes durch Kondensation teilweise entfeuchtet werden, wodurch Verdampfungswärme bzw. Kondensationswärme rückgewonnen wird. Die zu behandelnden Schlämme werden zyklisch durch die einzelnen Verfahrensstufen geführt und können nach Beendigung der thermophilen aeroben Stabilisierung einer anaeroben Faulung unterworfen werden.

Croydon Printing Company Ltd.

0252069

- 1 -

## Vorrichtung zur Behandlung von Abfallschlämmen

Die Erfindung bezieht sich auf eine Vorrichtung zur Behandlung von Abfallschlämmen, wobei in einem Reaktionsraum die Schlammentseuchung durch aerobe Umsetzung bei Temperaturen von über 50°C und unterhalb des Siedepunktes der flüssigen Phase vorgenomen wird und Rohschlamm durch Wärmeaustausch mit aerob behandeltem Schlamm vorgewärmt wird.

Bei der aerob thermophilen Schlammbehandlung wird Klärschlamm belüftet, wobei auf diese Weise eine Selbsterwärmung auf Temperaturen von 50 bis 70°C erzielt werden kann. Derartig hohe Temperaturen ergeben unter Einhaltung bestimmter Randbedingungen eine Entseuchung und damit eine Abtötung von Krankheitserregern, die vor einer gegebenenfalls nachgeschalteten anaeroben Schlammfaulung vorgenommen werden kann. Eine thermophile Schlammbehandlung dient somit in erster Linie der Entseuchung, wobei der zu behandelnde Schlamm eine entsprechend lange Zeit auf der Behandlungstemperatur gehalten werden muß. Die biogene Erwärmung des Schlammes erfolgt hiebei in erster Linie durch die Atmungstätigkeit der Mikroorganismen und es entsteht Abwärme, welche zur Verringerung des Energiebedarfes mit Vorteil im gleichen Verfahren genutzt werden soll. Zur Energieeinsparung wurde bereits vorgeschlagen, die Abwärme derartiger Heißschlämme zur Vorwärmung von Rohschlamm heranzuziehen, wobei ein derartiges Verfahren beispielsweise der EP-B1-53 777 entnommen werden kann. Durch Einleitung von Sauerstoff kann die Temperatur im Reaktor weiter erhöht werden. Ein wesentlicher Energieverlust tritt aber immer noch durch die Abwärme der Abluft bzw. der Abgase auf. Zum Zwecke der Geruchlosmachung derartiger Abgase werden diese in der Regel über einen Abluftfilter, insbesondere einen Kompostfilter, geleitet.

Die Erfindung zielt nun darauf ab, eine Vorrichtung der eingangs genannten Art zu schaffen, deren thermischer

- 2 -

Wirkungsgrad gegenüber bekannten Vorrichtung verbessert ist, und bei welcher die Verlustwärme minimiert ist. Weiters zielt die Erfindung auf die Schaffung einer möglichst kompakten und somit leicht gasdicht abschließbaren Einrichtung ab. Zur Lösung dieser Aufgabe besteht die erfindungsgemäße Vorrichtung im wesentlichen darin, daß oberhalb des Reaktionsraumes für die aerobe Schlammbehandlung ein Rohschlammsammelraum angeordnet ist, an dessen Wänden, insbesondere dessen Boden, die Verfahrensabgase der aeroben Behandlung zur Vorwärmung des Rohschlammes unter gleichzeitiger zumindest teilweiser Entfeuchtung durch Kondensation zur Abluftleitung, insbesondere zu einem Abluftfilter, vorbeigeführt sind. Ein derartiger Rohschlammsammelraum oberhalb des Reaktionsraumes erlaubt es, eine kompakte Ausbildung zu schaffen, bei welcher die Verfahrensabgase zumindest entlang des Bodens des Rohschlammsammelraumes geführt sind, wobei die Bodenflächen dieses Rohschlammsammelraumes bereits teilweise zur Kondensation von in den Verfahrensabgasen enthaltener Feuchtigkeit ausgenutzt werden können. Da Verfahrensabgase der aeroben Behandlung unter gleichzeitiger, zumindest teilweiser Entfeuchtung durch Kondensation zur Vorwärmung des Rohschlammes verwendet werden, kann nicht nur die fühlbare Abwärme dieser Abgase, sondern vor allem die durch die relativ hohe Feuchtigkeit gebundene Abwärme weitgehend rückgewonnen werden, wobei die Kondensationswärme an den Rohschlamm abgegeben wird. Das an den Bodenflächen kondensierende Wasser kann unmittelbar in den darunterliegenden Reaktionsraum abfließen, und es wird eine besonders kleinbauende Einrichtung geschaffen, bei welcher die Wärmeverluste weitgehend herabgesetzt sind. Durch die Kondensation der Abgase und gleichzeitige Wärmeabgabe an den Wänden, insbesondere dem Boden des Rohschlammsammelraumes bleibt die gesamte Gasaufnahmekapazität des Schlammes für die nachfolgende Behandlung erhalten und es erfolgt keine zumindest teilweise Sättigung mit sauerstoffarmen Abgasen, wie dies bei einer Einleitung der Abgase in den Rohschlamm der Fall wäre und wodurch die weitere Sauerstoffaufnahme während der Behandlung erschwert würde.

Das am Rohschlammsammelraum entlanggeführte Abgas kann zusätzlich, wie es einer vorteilhaften Weiterbildung der erfindungsgemäßen Vorrichtung entspricht, an seiner dem Reaktionsraum abgewandten Seite des Schlammsammelraumes tangential bzw. radial in diesen Schlammsammelraum münden, wobei die Verfahrensabgase aus dem Schlammsammelraum ausgebracht werden. Die in den Verfahrensabgasen noch enthaltene Feuchtigkeit kann auf diese Weise an der Oberfläche des im Rohschlammsammelraum enthaltenen Rohschlammes weiter kondensieren, so daß eine relativ weitgehende Entfeuchtung der Verfahrensabgase und damit eine weitgehende Rückgewinnung der gespeicherten thermischen Energie möglich wird. Der in dem Rohschlammsammelraum enthaltene Schlamm kommt zumeist unmittelbar aus einem Eindicker und befindet sich gegenüber dem im Reaktionsraum enthaltenen Heißschlamm auf wesentlich geringerer Temperatur, so daß aufgrund dieser Temperaturdifferenz eine weitgehende Kondensation zu erwarten ist. Zusätzlich kann jedoch mit Vorteil innerhalb des Rohschlammraumes ein Abluftkondensator, insbesondere mit einer Gasführung entlang einer ebenen Spirale, angeordnet sein, um weitere thermische Energie durch Kondensation rückzugewinnen.

Mit Vorteil ist die Ausbildung so getroffen, daß der Schlammsammelraum eine konische Bodenfläche aufweist, deren Spitze zum Reaktionsraum weist. Eine derartige konische Bodenfläche erlaubt es, das kondensierende Wasser zum Reaktionsraum hin abzuleiten und abfließen zu lassen.

Der Rohschlamm muß in den Rohschlammsammelraum eingefüllt werden und in der Folge dem Behandlungsverfahren unterworfen werden. Um auch hier Wärmeverluste möglichst klein zu halten, wird die bekannte Schlammvorwärmung mit einer erfindungsgemäßen Vorrichtung durchgeführt, bei welcher zusätzlich der

- 4 -

Reaktionsraum als säulenförmiger Ringraum ausgebildet ist und einen zentralen Wärmetausch- bzw. Einwirkraum umschließt. Durch den oberhalb des Reaktionsraumes angeordneten Rohschlammsammelraum wird bereits eine einfach zu überdachende und damit gasdicht abschließbare Einrichtung geschaffen, wobei der zentrale Wärmetausch- und Einwirkraum ohne wesentliche Vergrößerung der Baumaße einen wirkungsvollen Wärmetausch zwischen dem aus dem Reaktionsraum ausgebrachten Heißschlamm und dem zu behandelnden Rohschlamm ermöglicht, so daß vorgewärmter Rohschlamm in den Reaktionsraum rückgeführt werden kann. Es gelangt somit Rohschlamm über eine den Wärmetausch- und Einwirkraum durchsetzende Leitung, in welche die Vorwärmung erfolgt, in den Reaktionsraum, wobei durch die Anordnung eines zentralen Wärmetausch- bzw. Einwirkraumes die Möglichkeit geschaffen wird, bereits behandelten Heißschlamm, welcher sich noch auf hoher Temperatur befindet, in dem Wärmetauschraum ausreagieren zu lassen und bei dieser Gelegenheit die fühlbare Wärme mit dem vorzuwärmendem Rohschlamm auszutauschen. Mit Vorteil ist die Konstruktion hiebei so getroffen, daß innerhalb des Wärmetausch- bzw. Einwirkraumes Rohrleitungen für die Umwälzung von Rohschlamm aus dem Rohschlammraum und zum Beschicken des Rohschlammraumes vorgesehen sind.

Um die Überführung von Rohschlamm bei diskontinuierlichem Betrieb in den Reaktionsraum zu ermöglichen, kann nach einem durch Umwälzen des Rohschlammes innerhalb des Wärmetausch- bzw. Einwirkraumes erfolgten Vorwärmen des Rohschlammes der Rohschlammraum über eine abschließbare Öffnung, insbesondere eine im oberen Bereich der maximalen Füllhöhe mündende Leitung mit dem Reaktionsraum verbindbar sein. Auf diese Weise kann der Rohschlammraum diskontinuierlich entleert werden, wobei eine entsprechende Menge des behandelten Heißschlammes in den Wärmetausch- bzw. Einwirkraum übergeführt werden kann. Zu diesem Zweck ist die Ausbildung mit Vorteil so getroffen, daß der Reaktionsraum über eine abschließbare Öffnung, insbesondere eine nahe dem Boden des Reaktionsraumes und des Wärmetausch- bzw. Einwirkraumes mündende Leitung, mit dem Wärmetausch- bzw. Einwirkraum verbindbar ist.

Innerhalb des Reaktionsraumes kann in an sich bekannter Weise eine Belüftungseinrichtung vorgesehen sein. Die hiefür vorgesehene Umwälzpumpe für die Zufuhr belüfteten Schlammes wird mit Vorteil über einen Wärmetauscher geführt, um bei Inbetriebnahme der Anlage rascher das erforderliche Temperaturniveau für die thermophile Behandlung zu erzielen. Bei laufender Reaktion wird die zusätzliche Erwärmung des belüfteten rückgeführten Schlammes immer dann entbehrlich, wenn die Atmungsaktivität ausreicht, um biogene Wärme in dem erforderlichen Ausmaß zu produzieren.

Nach dem Ausreagieren des belüfteten Heißschlammes im Wärmetausch- bzw. Einwirkraum kann die Überführung in eine nachfolgende Behandlung, insbesondere eine anaerobe Faulung dadurch vorgenommen werden, daß an den Wärmetausch- bzw. Einwirkraum eine Leitung zu einem nachgeschalteten Behandlungsraum, insbesondere einem Faulbehälter, in welche Leitung vorzugsweise eine Schlammpumpe eingeschaltet ist, angeschlossen ist.

Der Aufwand an Pumpen und Ventilen läßt sich dadurch minimieren, daß die Ausbildung so getroffen ist, daß die Pumpe zum Beschicken des Rohschlammraumes mit einer Rohrleitung im Inneren des Wärmetausch- bzw. Einwirkraumes verbindbar ist und über eine Verbindungsleitung und Absperrschieber auf Umwälzen des Rohschlammes unter gegenläufigem Durchströmen von wenigstens zwei Rohrleitungen im Inneren des Wärmetausch- und Einwirkraumes umschaltbar ist, wobei die Zuführungspumpe für den Rohschlamm in den Rohschlammsammelbehälter durch Umschalten der entsprechenden Ventile als Umwälzpumpe Verwendung finden kann, wodurch der Rohschlamm im

- 6 -

Wärmetauschraum Wärme aus dem darin enthaltenen nicht mehr belüfteten Heißschlamm aufnehmen kann und gleichzeitig dieser Heißschlamm im Einwirkraum auf eine für die nachfolgende Faulung geeignete Temperatur abgekühlt werden kann. Die konzentrische Anordnung von Reaktionsraum und zentralem Wärmetausch- bzw. Einwirkraum erlaubt es hiebei, die Wärmeverluste weiter herabzusetzen und eine besonders kompakte Bauform zu erzielen.

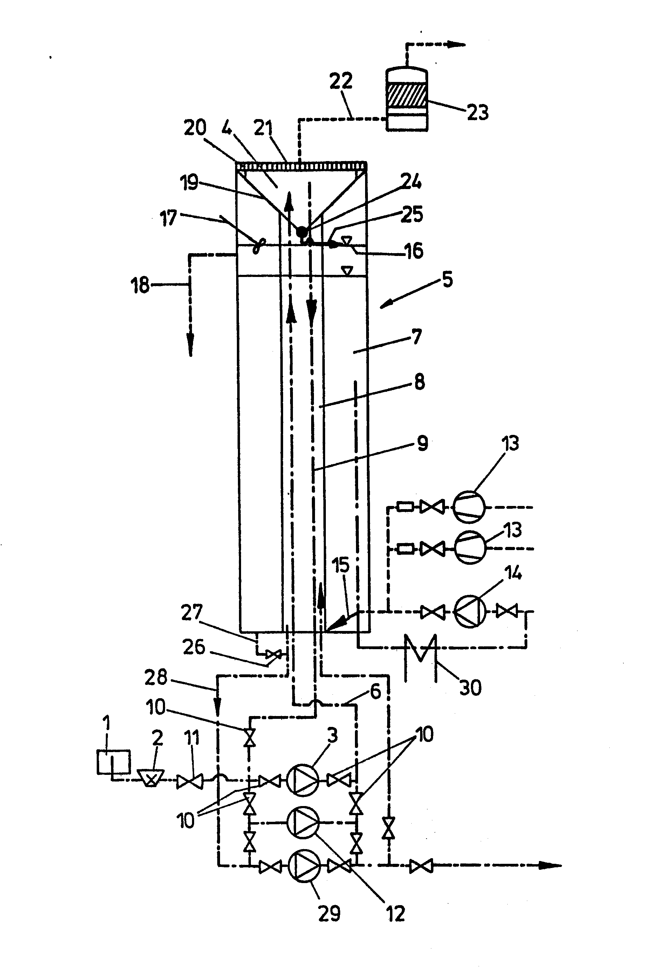

Die Erfindung wird nachfolgend anhand eines in der Zeichnung dargestellten Ausführungsbeispieles näher erläutert. Mit 1 ist schematisch ein Eindicker bezeichnet, aus welchem Rohschlamm abgezogen wird und in einer Zerkleinerungsvorrichtung 2 den Erfordernissen des nachfolgenden Prozesses angepaßt wird. Über eine Pumpe 3 kann der zerkleinerte Rohschlamm in einen Rohschlammsammelbehälter 4 gepumpt werden, welcher am Kopf eines Bioreaktors 5 angeordnet ist. Die Zuführungsleitung ist hiebei mit 6 bezeichnet. Unterhalb des Rohschlammsammelraumes ist ein Reaktionsraum 7 vorgesehen, welcher als ringförmiger Raum einen zentralen Wärmetausch- und Einwirkungsraum 8 umschließt.

An den Rohschlammsammelraum 4 sind neben der Zuführungsleitung 6 für den Rohschlamm wenigstens eine Rückführungsleitung 9 angeschlossen, welche über Ventile 10 mit der Rohschlammpumpe 3 in Verbindung gesetzt werden kann. Wenn gleichzeitig das Ventil 11 zum Eindicker geschlossen wird, kann bei laufender Pumpe 3 Material aus dem Rohschlammsammelraum 4 über die Leitungen 6 und 9 umgewälzt werden, wobei der Wärmetausch- bzw. Einwirkraum 8 durchströmt wird.

Für die Umwälzung zum Zwecke der Vorwärmung von Rohschlamm kann eine zusätzliche Pumpe 12 vorgesehen sein, sofern zusätzliche absperrbare Ventile 10 angeordnet sind.

Im Reaktionsraum 7 erfolgt eine Belüftung des Schlammes, wofür Kompressoren 13 vorgesehen sind, über welche Preßluft in eine über eine Umwälzpumpe 14 im Kreislauf geführte Teilmenge des aus dem Reaktionsraum 7 abgezogenen Schlammes eingepreßt wird. Die Belüftungseinrichtung mündet hiebei über Düsen 15 im Inneren des Reaktionsraumes 7. Die maximale Füllhöhe des Reaktionsraumes ist mit 16 angedeutet und im oberen Bereich des Reaktionsraumes ist ein Schaumzerstörer 17 angeordnet. Aufschwimmender Schlamm kann über einen Überlauf 18 dem Eindicker rückgeführt werden. Die den Reaktionsraum verlassenden Verfahrensabgase werden längs eines konischen Bodens 19 des Rohschlammsammelraumes 4 zu Eintrittsöffnungen 20 an der Oberkante des Rohschlammsammelraumes 4 geführt, wobei an dieser Stelle auch weitere Abluftkondensatoren 21 angeordnet sein können. Die Verfahrensabgase verlassen in der Folge entfeuchtet über eine Leitung 22 den Rohschlammsammelraum und werden über einen biologischen Abluftfilter 23 geführt und geruchlos gemacht.

Das bei 20 in den Rohschlammsammelraum eintretende Abgas kann durch entsprechende Leitflächen zu einer ebenen spiralförmigen Bewegung eingespeist werden, um die gesamte Oberfläche des Rohschlammes im Rohschlammsammelraum 4 zu bestreichen und weitere Feuchtigkeit abzugeben.

Um Rohschlamm aus dem Rohschlammsammelraum 4 in den Reaktionsraum 7 auszutragen, ist eine verschließbare Öffnung 24 vorgesehen, an welche eine Leitung 25 zum Reaktionsraum 7 mündet. Gleichzeitig muß eine entsprechende Menge des behandelten Heißschlammes aus dem Reaktionsraum 7 abgezogen werden und in den Wärmetausch- bzw. Einwirkraum 8 übergeführt werden. Zu diesem Zweck ist ein Absperrorgan 26 vorgesehen, welche in einer Leitung 27 zwischen dem Boden des Reaktionsraumes 7 und dem Boden des Wärmetausch- bzw. Einwirkraumes 8 angeordnet ist.

Nach dem Umschalten der Pumpe 3 bzw. Einschalten der Pumpe 12 zum Zwecke der Umwälzung von Rohschlamm aus dem Rohschlammsammelraum 4 vor dem Überführen dieses Rohschlammes in den Reaktionsraum 7 wird der im Wärmetausch- bzw. Einwirkraum 8 enthaltene, nicht mehr belüftete Heißschlamm abgekühlt und kann in der Folge über eine Leitung 28 und eine Pumpe 29 ausgebracht werden und beispielsweise einem nicht dargestellten Faulbehälter zugeführt werden. Nach dem Entleeren des Wärmetausch- bzw. Einwirkraumes kann wiederum über die Leitung 27 neuerlich Belebtschlamm in diesen Raum 8 übergeführt werden. Nach dem Entleeren des Rohschlammsammelraumes 4 in den Reaktionsraum 7 kann neuerlich vom Eindicker kommender Rohschlamm dem Rohschlammsammelraum 4 zugeführt werden. Da dieser Rohschlamm sich gegenüber der Verfahrenstemperatur auf wesentlich geringeren Temperaturen befindet, kann Feuchte aus den Verfahrensabgasen kondensiert werden und die Kondensationswärme im Prozeß rückgewonnen werden.

Die aerob thermophile Schlammentseuchung wird somit semikontinuierlich betrieben, wobei sich alle Betriebszustände in regelmäßigen Zeitabständen getaktet wiederholen. Nach Herstellung eines stationären Betriebszustandes am Ende des Einfahrbetriebes ist der Reaktionsraum 7 bis zu seinem maximalen Niveau mit entseuchtem Heißschlamm gefüllt. Die Reaktorumwälzpumpe 14 sowie die Drucklufterzeuger 13 können am Ende der Reaktion abgeschaltet werden. Die Temperaturen im Reaktionsraum 7 betragen zu diesem Zeitpunkt zumeist etwa 60 bis 65°C. Der Rohschlammraum 4 ist bei diesem Betriebszustand mit vorgewärmten Rohschlamm gefüllt, wobei hier Temperaturen zwischen 25 und 40°C erreicht werden. Der Wärmetausch- bzw. Einwirkraum 8 ist in diesem Betriebszustand entleert und sämtliche Schieber sind geschlossen.

Das Ventil 24 wird geöffnet, so daß vorgewärmter Rohschlamm aus dem Rohschlammsammelraum in den Reaktionsraum 7 gelangt und aerob thermophil behandelter Schlamm aus dem

Reaktionsraum 7 in den Wärmetausch- bzw. Einwirkraum 8 übergeführt wird. Sobald der Rohschlammsammelraum 4 entleert ist, haben sich im Reaktionsraum 7 und im Wärmetausch- bzw. Einwirkraum die Flüssigniveaus aneinander angeglichen und es kann das Ventil 24 geschlossen werden. Unmittelbar anschließend muß für eine Belüftung im Reaktionsraum 7 Sorge getragen werden, wobei die Druckluftzugabe so gesteuert wird, daß eine optimale Sauerstoffausnützung erreicht wird und die Temperatur im Reaktionsraum 7 im günstigsten Bereich für den Entseuchungsvorgang bleibt. Hiezu kann eine intermittierende Belüftung vorgesehen sein. Je nach den herrschenden Temperaturverhältnissen und der angestrebten Wärmestromführung wird der Umwälzkreislauf für die Belüftung und damit die Pumpe 14 in Betrieb gesetzt, wobei über einen Wärmetauscher 30 die erforderliche Temperatur eingestellt werden kann.

Zugleich mit der Inbetriebnahme des Belüftungssystems wird auch die Beschickung des Rohschlammraumes 4 mit kaltem Rohschlamm vorgenommen. Der mit kaltem Rohschlamm gefüllte Rohschlammraum dient in der Folge zur Kühlung der Abluft aus dem Reaktionsraum 7, wobei ein Großteil der Verdampfungswärme durch Kondensation rückgewonnen wird und eine Erwärmung des Rohschlammes bewirkt wird.

Nach einer festgelegten Einwirkzeit wird im Wärmetausch- bzw. Einwirkraum 8 der Schlamm, welcher Temperaturen von 60 bis 65°C aufweisen kann, auf 30 bis 40°C abgekühlt. Zu diesem Zweck wird der kalte Rohschlamm aus dem Rohschlammsammelraum über die Rohrleitungen 6 und 9 in Kreislauf gepumpt und so lange im Gegenstrom umgewälzt, bis der entseuchte Schlamm im Raum 8 die gewünschte Temperatur von 30 bis 40°C erreicht hat. In gleichem Ausmaß erfolgt eine entsprechende Vorwärmung des Rohschlammes. Am Ende dieses Wärmetauschzyklus wird der entseuchte Schlamm aus dem Wärmetausch- und Einwirkraum 8 zu einem Faulbehälter ausgetragen, wo eine anaerobe Stabilisierung erfolgt.

Der Kühleffekt für die Abluft kann durch eine Zwangsführung der Abluft über der Rohschlammoberfläche verbessert werden. Alternativ zur Geruchsfreimachung der Abluft durch einen biologischen Abluftfilter 23 kann zumindest ein Teil der Abluft in das Belebungsbecken der zugehörigen Abwasserreinigungsanlage rückgeblasen werden.

- 11 -

**Patentansprüche:**

1. Vorrichtung zur Behandlung von Abfallschlämmen, wobei in einem Reaktionsraum (7) die Schlammentseuchung durch aerobe Umsetzung bei Temperaturen von über 50°C und unterhalb des Siedepunktes der flüssigen Phase vorgenommen wird und Rohschlamm durch Wärmeaustausch mit aerob behandeltem Schlamm vorgewärmt wird, dadurch gekennzeichnet, daß oberhalb des Reaktionsraumes (7) für die aerobe Schlammbehandlung ein Rohschlammsammelraum (4) angeordnet ist, an dessen Wänden, insbesondere dessen Boden (19), die Verfahrensabgase der aeroben Behandlung zur Vorwärmung des Rohschlammes unter gleichzeitiger zumindest teilweiser Entfeuchtung durch Kondensation zur Abluftleitung (22), insbesondere zu einem Abluftfilter (23), vorbeigeführt sind.

2. Vorrichtung nach Anspruch 1, dadurch gekennzeichnet, daß der Schlammsammelraum an seiner dem Reaktionsraum (7) abgewandten Seite tangential bzw. radial mündende Eintrittsöffnungen (20) für die Verfahrensabgase aufweist und daß die Verfahrensabgase aus dem Rohschlammsammelraum (4) ausgebracht werden.

3. Vorrichtung nach Anspruch 1 oder 2, dadurch gekennzeichnet, daß innerhalb des Rohschlammraumes (4) ein Abluftkondensator (21), insbesondere mit einer Gasführung entlang einer ebenen Spirale, angeordnet ist.

4. Vorrichtung nach einem der Ansprüche 1 bis 3, dadurch gekennzeichnet, daß der Schlammsammelraum (4) eine konische Bodenfläche (19) aufweist, deren Spitze zum Reaktionsraum (7) weist.

5. Vorrichtung nach einem der Ansprüche 1 bis 4, dadurch gekennzeichnet, daß der Reaktionsraum (7) als säulenförmiger

- 12 -

Ringraum ausgebildet ist und einen zentralen Wärmetausch- bzw. Einwirkraum (8) umschließt.

6. Vorrichtung nach Anspruch 5, dadurch gekennzeichnet, daß innerhalb des Wärmetausch- bzw. Einwirkraumes (8) Rohrleitungen (9) für die Umwälzung von Rohschlamm aus dem Rohschlammraum (4) und zum Beschicken des Rohschlammraumes vorgesehen sind.

7. Vorrichtung nach einem der Ansprüche 1 bis 6, dadurch gekennzeichnet, daß der Rohschlammraum (4) über eine abschließbare Öffnung (24), insbesondere eine im oberen Bereich der maximalen Füllhöhe mündende Leitung (25), mit dem Reaktionsraum (7) verbindbar ist.

8. Vorrichtung nach einem der Ansprüche 5 bis 7, dadurch gekennzeichnet, daß der Reaktionsraum (7) über eine abschließbare Öffnung (26), insbesondere eine nahe dem Boden des Reaktionsraumes (7) und des Wärmetausch- bzw. Einwirkraumes (8) mündende Leitung (27), mit dem Wärmetausch- bzw. Einwirkraum (8) verbindbar ist.

9. Vorrichtung nach einem der Ansprüche 1 bis 8, dadurch gekennzeichnet, daß innerhalb des Reaktionsraumes (7) in an sich bekannter Weise eine Belüftungseinrichtung vorgesehen ist und daß eine Umwälzpumpe (14) für die Zufuhr belüfteten Schlammes über einen Wärmetauscher (30) geführt ist.

10. Vorrichtung nach einem der Ansprüche 5 bis 9, dadurch gekennzeichnet, daß an den Wärmetausch- bzw. Einwirkraum (8) eine Leitung zu einem nachgeschalteten Behandlungsraum, insbesondere einem Faulbehälter, in welche Leitung (28) vorzugsweise eine Schlammpumpe (29) eingeschaltet ist, angeschlossen ist.

- 13 -

11. Vorrichtung nach einem der Ansprüche 5 bis 10, dadurch gekennzeichnet, daß die Pumpe (3) zum Beschicken des Rohschlammraumes (4) mit einer Rohrleitung (9) im Inneren des Wärmetausch- bzw. Einwirkraumes (8) verbindbar ist und über eine Verbindungsleitung und Absperrschieber auf Umwälzen des Rohschlammes unter gegenläufigem Durchströmen von wenigstens zwei Rohrleitungen im Inneren des Wärmetausch- und Einwirkraumes (8) umschaltbar ist.

0252069